# EUROPEAN PATENT APPLICATION

(11) **EP 2 848 457 A2**
(43) Date of publication of application: **18.03.2015**
(21) Application number: 14184402.7
(22) Date of filing: 11.09.2014
(51) Int. Cl.: B60L 11/18

(54) **Methods and systems for electric vehicle charging**

(30) Priority: 11.09.2013 US 201361876698 P
(71) Applicant: Proterra Inc, Greenville, SC 29607 (US)
(72) Inventor: Sarkar Reuben, Greenville South Carolina 29601 (US); Gottschalk Marc, California 94028 (US)
(74) Representative: Vossius & Partner

(57) **Abstract**

A method of charging an electric vehicle includes electrically coupling the electric vehicle to a charging station. The charging station may be electrically coupled to both a power supply grid and an energy storage system. The method may also include charging the electric vehicle using the charging station.

## Description

### BACKGROUND

Electric vehicles can be configured in different types and sizes; and whatever form they may be in, they need to be recharged. Such recharging typically occurs at a charging site, where electrical energy from a utility service is formatted appropriately for charging of batteries.

In general, electrical energy for consumption, including consumption by recharging of the electric vehicles, is typically generated by a relatively small number of power generating stations. Such generation of electricity can be achieved by a number of ways. Such generated electricity may be distributed to consumers via a network of electrical connections commonly referred to as a "grid." Grids can have different sizes and complexities, depending on factors such as geography and demand level.

Electric grid operators may operate the grid such that the amount of electrical energy produced and distributed generally meets the demand placed by consumption. Such matching of demand with supply can be achieved based on parameters such as environmental condition, time of day, and historical pattern.

When the demand exceeds the supply, energy supply can be increased by, for example, increasing the output of power generators. Such a configuration may result in power generators to operate with some reserve of power not used on a continuous basis. Such a setting for generating electrical energy may not be efficient.

Further, although such increasing of energy output may compensate for relatively slow increase in demand, there may be situations where relatively fast fluctuations in demand may not be addressed properly by the power generators. Such uncompensated or unplanned fluctuations in electrical power can have undesirable effects in at least some of the devices and systems that consume electrical energy from the grid.

### SUMMARY

The present disclosure provides methods and systems for managing the use of power by electric vehicle charging sites in order to optimally address the planning needs of electric grid operators and to efficiently match generated power with the demand needs of electric vehicles, the availability of power from utilities, and/or fluctuations in utility (e.g., electricity) costs. Such power management also can resolve fundamental drivers of demand charges that can underlie utility rate schedules, which may come into effect during rapid charging of electric vehicles, such as electric buses, heavy-duty vehicles, or passenger cars. These solutions include hardware and software algorithms that independently or in concert work with one another to provide a solution to mitigating the concerns of utility companies over high power electric vehicle charging. In the case of use in the transit bus market, solutions provided herein can balance the needs of transit customers and municipal stakeholders for cost effective solutions, which can be part of an infrastructure that can be integrated into existing systems with little disruption to the surrounding environment.

In an aspect, management of power (or electricity) use for electric vehicle (e.g., electric bus) charging comprises a geolocated vehicle providing wireless or wired communication to and from an electric grid operator (or system), and to and from a charging site, as well as wired or wireless communication between the charging site and the grid operator (or system) that may include at least any or all the following information: (i) the timing of arrival of a vehicle at a charging site such that the electric grid operator may prepare in advance for electricity usage at that location on the power grid in order to better manage the power grid; (ii) communication between the electric grid operator, the charging site and the vehicle (e.g., electric bus) through hardware and software algorithms of the electricity needs of the vehicle for the intended or otherwise predetermined route for each charging event at a charging site; (iii) communication between the electric grid operator, the charging site and the vehicle through hardware and software algorithms regarding the optimal time of charge and optimal rate of charge to address the needs of the vehicle for the intended or otherwise predetermined route, management of the power grid by the grid operator with respect to electricity generation and distribution, and management of the vehicle schedule and electricity costs by the transit vehicle operator; (iv) in connection with subsection (iii), coordination of demand response activities of the grid operator to better manage use of electricity on the power grid in the sector of the grid in which the charging events are occurring at the charging site; and (v) in connection with subsection (iii) management of the use of electricity by the vehicle while the vehicle is in operation between charging events to reduce, when necessary, such electricity usage to address the needs of the grid operator to manage such usage (such as, e.g., during peak periods) and to manage electricity costs for the benefit of the transit vehicle operator.

In another aspect, a method for charging electric vehicles comprises (a) providing a charging station that is electrically coupled to a power grid and an energy storage system, wherein the charging station is configured to charge electric vehicles in succession and in some cases simultaneously from power supplied by the energy storage system and the power grid, and wherein the power grid supplies substantially constant power to the charging station during electric vehicle charging, wherein said substantially constant power is less than a power requirement of a given electric vehicle among said electric vehicles; and (b) alternately and sequentially (i) charging the energy storage system from the power grid during a period of reduced electric vehicle charging, and (ii) charging electric vehicles using combined power from the power grid and the energy storage system during a period of reduced energy storage system charging. In some situations, the method further comprises determining at least one of a geolocation and a state of charge of each of said vehicles; and selecting charging station operating parameters based on said at least one of said geolocation and said state of charge.

In another aspect, a method for charging electric vehicles comprises (a) in a first time period, electrically coupling a first electric vehicle to a charging station that is electrically coupled to a power grid and an energy storage system, wherein the power grid supplies substantially constant power to the charging station during electric vehicle charging; (b) directing power from the charging station to the first electric vehicle to charge a first vehicle energy storage system of the first electric vehicle, wherein a subset of the power requirement of the first electric vehicle is supplied by the power grid and a remainder of the power requirement of the first electric vehicle is supplied by the energy storage system; (c) in the first time period, electrically coupling a second electric vehicle to the charging station; (d) directing power from the charging station to the second electric vehicle to charge a second vehicle energy storage system of the second electric vehicle, wherein a subset of the power requirement of the second electric vehicle is supplied by the power grid and a remainder of the power requirement of the second electric vehicle is supplied by the energy storage system; and (e) in a second time period, directing power from the power grid through the charging station to the energy storage system to charge the energy storage system. In some situations, the method further comprises determining at least one of a geolocation and a state of charge of each of said first and second electric vehicles; and selecting charging station operating parameters based on said at least one of said geolocation and said state of charge.

Additional aspects and advantages of the present disclosure will become readily apparent to those skilled in this art from the following detailed description, wherein only illustrative embodiments of the present disclosure are shown and described. As will be realized, the present disclosure is capable of other and different embodiments, and its several details are capable of modifications in various obvious respects, all without departing from the disclosure. Accordingly, the drawings and description are to be regarded as illustrative in nature, and not as restrictive.

### INCORPORATION BY REFERENCE

All publications, patents, and patent applications mentioned in this specification are herein incorporated by reference to the same extent as if each individual publication, patent, or patent application was specifically and individually indicated to be incorporated by reference.

### BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings of which:
**FIG. 1A** shows a method for charging electric vehicles, as may be employed in some charging stations presently available. **FIG. 1B** shows another method for charging electric vehicles, as may be employed in some charging stations presently available;
**FIG. 2** shows a method for charging electric vehicles, in accordance with some embodiments;
**FIG. 3A** shows a method for charging electric vehicles, in accordance with some embodiments of the invention. **FIG. 3B** shows an alternative method for charging electric vehicles, in accordance with some embodiments;
**FIG. 4** schematically illustrates a system for charging and/or discharging an energy storage device of an electric vehicle, in accordance with some embodiments;
**FIG. 5** schematically illustrates the system of **FIG. 4** with additional energy storage systems, in accordance with some embodiments;
**FIG. 6** schematically illustrates a computer system that is programmed or otherwise configured to implement methods of the present disclosure;
**FIG. 7** shows example plots of power as a function of time for charging buses; and
**FIG. 8** shows cumulative energy with time for the example of **FIG. 7****.**

### DETAILED DESCRIPTION

While various embodiments of the invention have been shown and described herein, it will be obvious to those skilled in the art that such embodiments are provided by way of example only. Numerous variations, changes, and substitutions may occur to those skilled in the art without departing from the invention. It should be understood that various alternatives to the embodiments of the invention described herein may be employed in practicing the invention.

The term "electric vehicle," as used herein, generally refers to an electric or hybrid electric vehicle. An electric vehicle can be an electric or hybrid electric car, truck, bus, scooter, motorcycle, train, robot or plane, or other vehicle that is powered at least in part by electricity. An electric vehicle can be a heavy duty vehicle, such as a heavy duty bus or other heavy duty car or truck, or a light duty vehicle. Examples of heavy-duty vehicles include a transit bus, a school bus, a delivery van, a shuttle bus, a tractor trailer, a class 5 truck (e.g., weighing 16,001-19,500 lbs., two-axle, six-tire single unit), a class 6 truck (e.g., weighing 19,501-26,000 lbs., three-axle single unit), a class 7 truck (e.g., weighing 26,001-33,000 lbs., four or more axle single unit), a class 8 truck (e.g., weighing 33,000 lbs. and over, four or less axle single trailer), a vehicle with a gross vehicle weight rating weighing over 14,000 pounds, a vehicle with a cargo to driver mass ratio of 15:1 or greater, a vehicle with six or more tires, a vehicle with three or more axles, or any other type of high occupancy or heavy-duty vehicle.

An electric vehicle can include an energy storage system, such as a battery, in addition to a power train, which can generate motion using electrical energy from the energy storage system.

The term "on peak," as used herein, generally refers to a period of time in which the demand for electrical energy, electricity or power is at or approaching a maximum. In some examples, the demand for on peak power is a maximum over the period of a day. In an example, on peak is between the hours of 8 AM and 9 PM or 12 PM and 3 PM.

The term "off peak," as used herein, generally refers to a period of time in which the demand for electrical energy, electricity or power is not on peak. In some examples, the demand for off peak power is a minimum over the period of a day. In an example, off peak is between the hours of 9 PM and 8 AM or 12 AM and 6 AM.

The term "geographic location" (also "geo-location" and "geolocation" herein), as used herein, generally refers to the geographic location of an object, such as an electric vehicle. A geolocation of a vehicle can be determined or approximated using a geolocation device or system associated with the vehicle, which may be an electronic device (e.g., mobile device) attached to or in proximity to the vehicle. Geolocation can include the relative positioning between objects, such as between a vehicle and a charging station.

The geolocation of an object can be determined using the manner in which a geolocation device of system of or associated with the object communicates with a communication node, such as a wireless node. In an example, the geolocation of a vehicle can be determined using node triangulation, such as, e.g., wireless node, WiFi (or Wi-Fi) node, satellite triangulation, and/or cellular tower node triangulation. In another example, the geolocation of a vehicle can be determined by assessing the proximity of the vehicle to a WiFi hotspot or one or more wireless routers. In some cases, the geolocation of an vehicle can be determined using a geolocation device or system that includes a global positioning system ("GPS"), such a GPS subsystem associated with an electronic system of the vehicle.

An electric vehicle can include an energy storage device (e.g., batteries) that can store energy that can be used to power the vehicle. The energy storage device can be charged at a given period of time, such as at night or when the vehicle is not in use, continuously as the vehicle is used, or intermittently during use of the vehicle, such as at a given location along a route of the vehicle. For example, an electric bus can be charged at a charging station along its route.

Energy used to charge an energy storage device of an electric or hybrid electric vehicle can be provided by a power generation system and delivered to the energy storage device using an energy distribution system, such as, for example, an electric grid (also "grid" herein). An example of a grid is a smart grid. A grid can include a network of electrical wires for delivering energy from a power generation system (e.g., power plant) to a load, such as a charging station and subsequently to an electric or hybrid electric vehicle. A grid can include or be in electrical communication with one or more power generation systems, such as a power plant (e.g., nuclear power plant or coal filed power plant) and/or renewable energy source (e.g., photovoltaic solar systems or wind turbines).

An electric vehicle, such as an electric car or bus, may need to be charged at substantially high powers. For example, an electric bus may need to be charged along its route using a fast charging station that enables the bus (e.g., heavy-duty transit bus) to be charged at a substantially high power, in some cases up to or exceeding about 500 kW for short periods of time (e.g., at time period less than or equal to 15 minutes, 10 minutes, 5 minutes, 1 minute, 15 seconds) while in normal transit or service. Such power levels may be between about 50 and 100 times the typical passenger car charging power. Such power levels and charging time of use (TOU) can lead to grid billing demand charges that exceed or greatly exceed the base energy service, in some cases as high as 2-4 fold.

General energy rates may be set with a schedule for the purchase of energy in unit price per kilowatt-hour (e.g., $/kWh). Billing demand charges, which may be added for power levels above a certain power threshold, may vary during time of use (e.g., peak versus off-peak periods or seasonally) and may be impacted by power levels and TOU, or the availability of power from utilities and/or utility (e.g., electricity) costs may vary. These demand charges can negate some of the inherent total cost of ownership savings derived from fast charge electric buses and can inhibit adoption or shift purchases to less optimal slow charge electric buses, which can charge over longer periods at night but come with the disadvantage of substantially larger batteries, higher weights, lower efficiencies, and higher lifetime replacement costs. Conversely fast charge electric buses can utilize smaller batteries which are charged more frequently but have lower weights, better efficiencies, and lower lifetime costs. The effect of demand charges may be more pronounced for smaller fleets or pilot programs, which may have fewer buses over which to spread the demand charge, which may be assessed as a lump sum fee in addition to the unit price per kilowatt-hour base energy price within a given period of time (e.g., monthly). Demand charges in this case may work against adoption of more favorable market driven solutions for electric buses.

Demand charges may exist in order to discourage or encourage certain patterns of energy usage and offset the cost of bringing on additional peaking plants to meet the higher demand. These peaking plants are costly and do not provide instantaneous power on demand. Due to the power levels required to charge a fast charge electric bus, the charging power can be high enough to appear as a medium sized commercial operator from the eyes of the utility. Because charging between buses results in transient periods of ramping up and down power, a bus charging behaves like a commercial operator turning their power off and on repeatedly. Charging while in normal transit service means at least some of the charging will take place during peak billing periods. Similar, the frequency at which buses pull into and out of charging stations do not provide a sufficient window for utilities to respond with peaking plants to match charging power needs. Even if it were the case that utilities could respond instantaneously to the demand, those peaking plants would still result in additional cost to provide energy service.

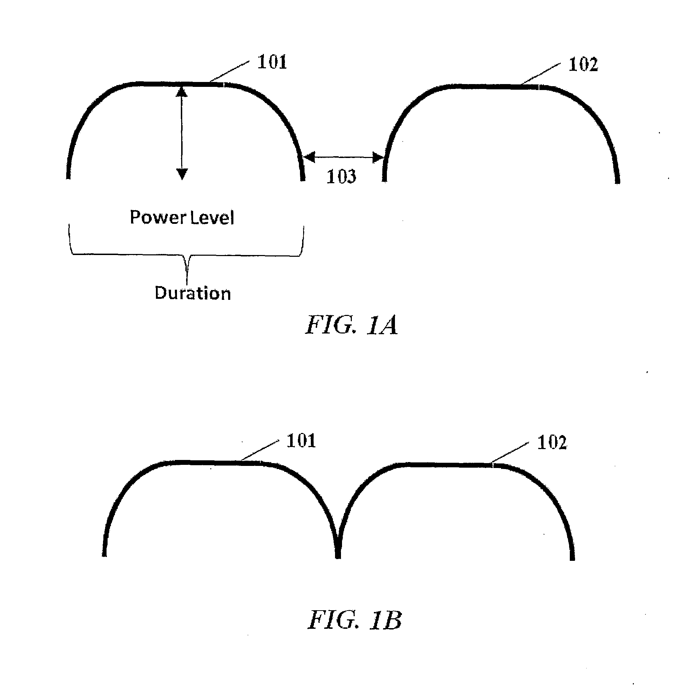

Although there are systems and methods currently available for charging electric vehicles, such systems and methods may place a huge demand on utility providers (e.g., power plants) and a power grid. **FIG. 1A** shows a method for charging electric vehicles, as may be employed in some charging stations presently available. Power is supplied from a power grid to a charging station and subsequently an electric vehicle. The charging station regulates the flow of electricity to an electric vehicle coupled to the charging station. The ordinance (y-axis) corresponds to power level supplied by the charging station to an electric vehicle, and the abscissa (x-axis) corresponds to time. In the illustrated example, a first charging cycle 101 and second charging cycle 102 are separated by a gap 103. During the gap, the charging station does not provide power to any electric vehicle. The charging cycles 101 and 102 are for charging a first and second electric vehicle, respectively, such as electric buses. All of the power (or energy per unit time) requirement of an energy storage system of an electric vehicle can be met by the power grid. However, the gap 103 may impose the need for power utilities (e.g., power plants) to provide power instantaneously on demand, which imposes substantial costs. In an example, a first and second electric bus each requires 300 Kilowatts (kW) of power to be supplied in a period of five minutes each for charging. The first charging cycle 101 and second charging cycle 102 have power outputs of about 300 kW and durations of about five minutes each. The gap 103 is about three minutes between the first charging cycle 101 and the second charging cycle 102. **FIG. 1B** shows another example of a charging cycle for electric vehicle. Here, the gap between the first charging cycles 101 and second charging cycle 102 is substantially zero, but there is an instantaneous change in demand on the power grid.

The present disclosure provides various methods and systems for charging electric vehicles in a manner that reduces the demand on utility providers and a power grid, or helps account for the availability of power from utilities and/or fluctuations in utility (e.g., electricity) costs. Methods and systems of the present disclosure can (i) provide steadier predictable load on the grid, such as by removing or smoothing transients or gaps between charges, (ii) reduce the steepness (power as a function of time) of the ramp up or down during charging, (iii) lower overall power required during charging, (iv) avoid charging during capacity tag-setting windows or avoid or minimize charging solely from a power grid during peak demand periods or periods in which the availability of power from utilities is low or utility costs fluctuate, and (v) provide transparency into demand generation from vehicle (e.g., bus) fleets, such as, for example, knowledge of vehicle fleet energy consumption requirements and locations.

Systems and methods provided herein can advantageously reduce, if not eliminate, the unexpected demand on a grid, including a utility provider (e.g., power plant), during electric vehicle charging. This can help reduce, if not eliminate, fluctuations in utility usage, which can impact utility costs.

Methods provided herein may be employed for use with various types of vehicles, including fleets and standalone vehicles. Methods provided herein can be employed for charging heavy duty vehicles, such as buses, or light duty vehicles, such as fast charging cars. Methods of the present disclosure may be employed for statistically managing demand or fluctuation on utility cost(s) on charging systems for fast charging cars.

Energy storage systems of the present disclosure can help provide a steady load on a power grid by removing or smoothing out the transient power demands or other fluctuations that can occur when buses pull into a charging station, are "fast" charged, and then pull out with a gap between buses in the queue. Such energy storage can be capable of picking up the charging power as the bus charging ramps down, allowing the charging station or charger to operate with a steady load on the grid. The charging station or charger can continue to provide power to the energy storage system at a power near or equivalent to the bus charging power until the next bus pulls into the charging station. At this point the bus charging power can ramp up and pull both from the energy storage system and the grid. The energy storage size and power capabilities can be designed such that there can be a balance that enables the demand or other fluctuations from the grid to remain relatively or substantially stable within acceptable limits from one or more utility providers. This type of strategy allows for a much smaller energy storage system that essentially holds the demand on the grid, or helps minimize the demand on the grid. This can help minimize the fluctuations in energy use on the grid, which can advantageously aid utility providers to predict energy user.

Advantageously, systems of the present disclosure can scale with an increase or decrease in the number of vehicles without an adjustment of substantial adjustment in the number of energy storage systems. For example, a charging system is capable of accommodating an increase in the number of buses from 8 per hour to 16 per hour without doubling the size (e.g., number of cells or capacity) of an energy storage system of the charging system.

In some embodiments, a charging station can accommodate an increase or decrease in the number of electric vehicles for charging or a power demand per electric vehicle by adjusting one or more of (i) the time period (or gap) between individual charges, (ii) the constant or substantially constant power drawn from the power grid during a vehicle charging time period (e.g., on peak) and (iii) vehicle velocity or speed (which can determine the time of arrival of the vehicle at the charging station). This enables the charging station to provide a set or predictable rate of energy demand on the grid (or power) while delivering the requisite power to charge an increasing or decreasing number of vehicles (or increasing or decreasing power demand per vehicle) without having to change or substantially change the size of the energy storage system. For example, a charging station with an energy storage system that is initially set to charge eight vehicles in an hour can be reconfigured to charge sixteen vehicles in an hour without having to double the size of the energy storage system. This saves in considerable material and operating expenses, and provides the flexibility for the charging station to accommodate changes in vehicle operational characteristics (e.g., power requirement or the number of vehicles charged in a given time period) in a substantially low time period, such as a time period of less than 1 day, 12 hours, 6 hours, 5 hours, 4 hours, 3 hours, 2 hours, 1 hour, 30 minutes, 15 minutes, 10 minutes, 5 minutes, 4 minutes, 3 minutes, 2 minutes, 1 minutes, 30 seconds, or even less.

Methods and systems of the present disclosure can operate with energy storage systems that have reduced sizes and/or capacities as compared to other systems. An energy storage system of the present disclosure can be smaller or substantially smaller than a trickle charge bank. Systems of the disclosure can have relatively fast discharge rates that can be sizable to enable demand rate avoidance or a reduction in fluctuation in utility (e.g., electricity) costs by avoiding or mitigating charging of charging station energy storage systems during peak periods. In some examples, a charging station energy storage system can work in conjunction with the grid to supply the requisite power to charge an electric vehicle. The energy storage system can supply a subset of the power requirement of the electric vehicle. As an alternative, the charging station can work independent of the grid. For example, the grid can charge the energy storage system, and the energy storage system can meet the power requirement of the electric vehicle entirely.

In some embodiments, a charging station comprising an energy storage system is used to charge vehicles in a manner such that in a period of reduced or no vehicle charging by the charging station (i.e., gaps between charges), the energy storage system is charged from a power grid but is not fully charged. The number of vehicles charged in a given time period and the constant power drawn from the power grid can be selected such that, in the period of reduced or no vehicle charging by the charging station, the energy storage system is charged to a point approaching, but short of, the maximum level of charge. In some examples, during gaps between charges, the energy storage system is charged from the power grid or another energy storage system to at least about 50%, 60%, 70%, 80%, 90%, 95%, 96%, 97%, 98%, or 99% of capacity, but not 100% of capacity. In other examples, during gaps between charges, the energy storage system is charged from the power grid or another energy storage system to at most about 50%, 60%, 70%, 80%, 90%, 95%, 96%, 97%, 98%, 99%, 99.9%, 99.99%, or 99.999% of capacity.

In some embodiments, during gaps between charges, an energy storage system of a charging station can be fully or substantially fully charged. In such a case, upon reaching a state of full charge, power delivery to the energy storage system from a power grid can be terminated, and the energy storage system can be disengaged from a load. When vehicle charging is required, the energy storage system can be coupled to an energy storage device of a vehicle to charge the energy storage device.

Systems of the present disclosure can provide a steady or substantially steady load on a power grid that is predictable to power utilities. Accordingly, appropriate rate schedules and lower cost methods for delivering power can be employed, in some cases similar to what may be employed for a commercial or industrial customer. This concept can have the effect of lowering the peak power level observed by the grid during charging time period by averaging the charging loads with the periods where no charging takes place. In some cases, an energy storage system of a charging station can be charged from a power grid at a rate that is selected such that the demand for power is at or below a given limit. The limit can be selected to reduce or minimize the instantaneous flow of power from the power grid to the energy storage system.

In some embodiments, an energy storage system has a size and/or capacity that is similar to an energy storage system employed by an electric vehicle, such as a bus. In an example, an energy storage system has a capacity that is less than about 100 kWh, 90 kWh, 80 kWh, 70 kWh, 60 kWh, 50 kWh, or smaller. In some cases, an energy storage system comprises one or more used cells from an electric vehicle. For example, a used cell from a bus is employed for use in an energy storage system for delivering power to electric vehicles during charging.

Systems and methods of the present disclosure can reduce, if not eliminate, the transient on-off power swings associated with buses coming in and out of charging stations. In addition, power levels from the grid and an energy storage system can be, on average, lower in the period in which demand rates or other fluctuations in utility costs apply. This can enable a charging station and/or a fleet of one or more electric vehicles to appear as a commercial or industrial customer with a steady load that may enable a preferable contracted rate structure from a utility provider. This can be advantageously achieved with a substantially smaller energy storage system (on the charging station side) as compared to other systems, which can reduce the total cost of ownership as well as the footprint and deployable nature of the system.

### Method for charging electric vehicles

An aspect of the present disclosure provides methods for charging electric vehicles by supplying a subset of the power requirement of an electric vehicle from a power grid and supplying a remainder of the power requirement from an energy storage system (e.g., battery). This can advantageously smooth or eliminate transients or gaps between charges, which can aid in providing a predictable load on an electrical grid.

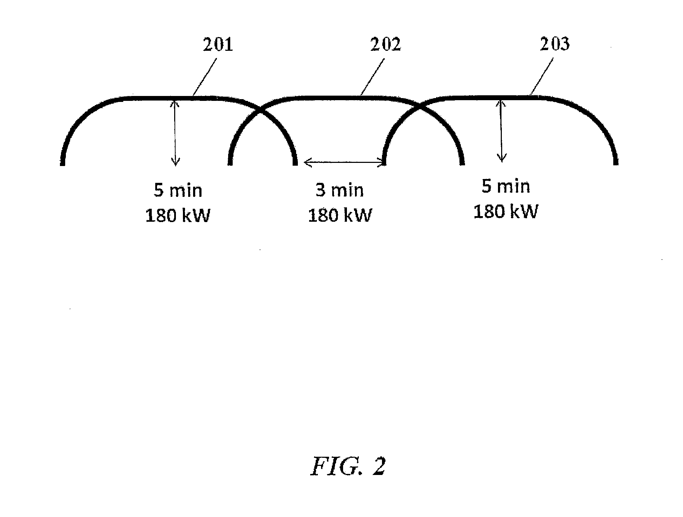

**FIG. 2** shows a method for charging electric vehicles (e.g., electric buses). Power is provided from a power grid to an electric vehicle with the aid of a charging station. The demand on the power grid during vehicle charging is shown as a function of time. A first charging cycle 201, second charging cycle 202 and third charging cycle 203 are shown. Each charging cycle 201-203 has a maximum output of 180 kW and duration of five minutes. The transient gap between a first cycle 201 and third cycle 203 is occupied by the second cycle 202. This is achieved by providing substantially constant power from the power grid (e.g., 180 kW) in a time period spanning the cycles 201-203. The deficiency in power that may be required to charge an electric vehicle (e.g., 120 kW for an electric vehicle that requires 300 kW) can be supplied by a secondary power source, such as an energy storage system.

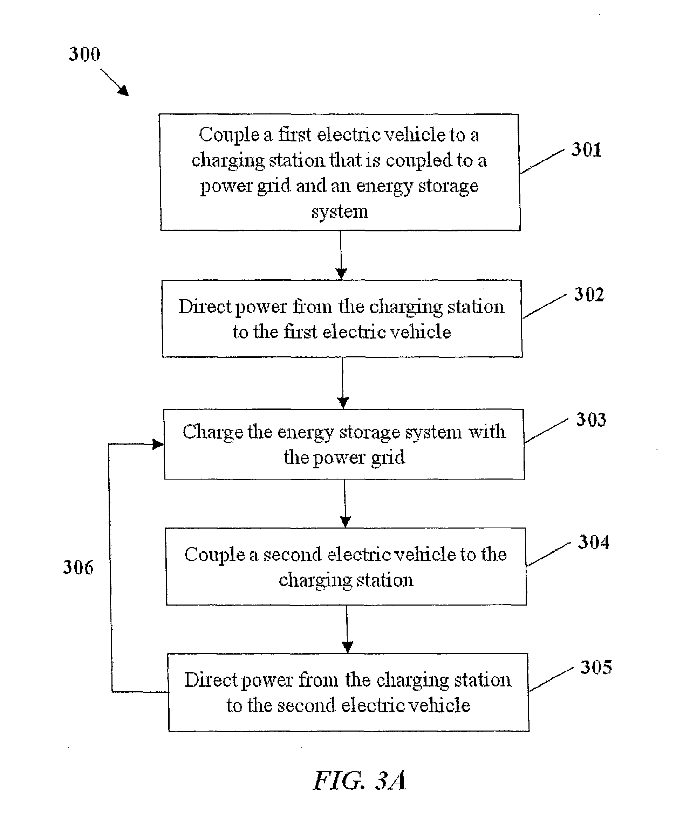

**FIG. 3A** shows a method 300 for charging electric vehicles. In a first operation 301 of the method 300, a first electric vehicle is electrically coupled to a charging station that is electrically coupled to a power grid and an energy storage system. The power grid supplies substantially constant power to the charging station during electric vehicle charging in a first time period (e.g., on peak). Next, in a second operation 302, the charging station supplies or directs power to the first electric vehicle to charge a first vehicle energy storage system of the first electric vehicle. A subset of the power requirement of the first electric vehicle is supplied by the power grid and a remainder of the power requirement of the first electric vehicle is supplied by the energy storage system. For example, the power grid supplies 180 kW and the energy storage system supplies 120 kW. Next, in a third operation 303, power is directed from the power grid through the charging station to the energy storage system to charge the energy storage system. The energy storage system is charged in the first time period. In a subsequent fourth operation 304, a second electric vehicle is electrically coupled to the charging station. Then, in a fifth operation 305, power is directed from the charging station to the second electric vehicle to charge a second vehicle energy storage system of the second electric vehicle. A subset of the power requirement of the second electric vehicle is supplied by the power grid and a remainder of the power requirement of the second electric vehicle is supplied by the energy storage system. For example, the power grid supplies 180 kW and the energy storage system supplies 120 kW. In a subsequent sixth operation 306, additional electric vehicles can be charged in the manner set forth in operations 303-305. In some examples, the second vehicle energy storage system is charged in the first time period.

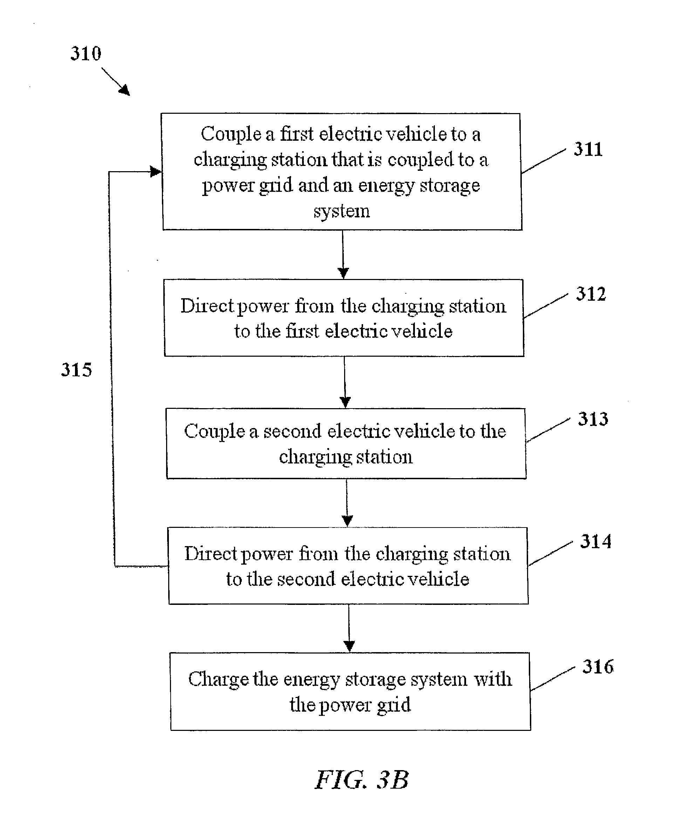

**FIG. 3B** shows an alternative method 310 for charging electric vehicles. In a first operation 311, a first electric vehicle is electrically coupled to a charging station that is electrically coupled to a power grid and an energy storage system. The power grid supplies substantially constant power to the charging station during electric vehicle charging in a first time period (e.g., on peak). Next, in a second operation 312, the charging station supplies power to the first electric vehicle to charge a first vehicle energy storage system of the first electric vehicle. A subset of the power requirement of the first electric vehicle is supplied by the power grid and a remainder of the power requirement of the first electric vehicle is supplied by the energy storage system. For example, the power grid supplies 180 kW and the energy storage system supplies 120 kW. Next, in a third operation 313, a second electric vehicle is electrically coupled to the charging station. Then, in a fourth operation 314, power is directed from the charging station to the second electric vehicle to charge a second vehicle energy storage system of the second electric vehicle. A subset of the power requirement of the second electric vehicle is supplied by the power grid and a remainder of the power requirement of the second electric vehicle is supplied by the energy storage system. For example, the power grid supplies 180 kW and the energy storage system supplies 120 kW. In subsequent operation 315, additional electric vehicles can be charged in the manner set forth in the first and second operations 311 and 312. Next, in a sixth operation 316, power is directed from the power grid through the charging station to the energy storage system to charge the energy storage system. The energy storage system is charged in a second time period (e.g., off peak).

In some cases, the first time period coincides the period of time in which electric vehicles are charged and the second time period coincides with the period of time in which electric vehicles are not charged or charging is being reduced. The first and second time periods in some instances can overlap.

In some examples, during charging of the first electric vehicle, the supply of power to the first electric vehicle is reduced to zero and the power supplied from the energy storage system is reduced from a charging power to zero. The supply of power from the grid is kept constant or substantially constant. With the supply of power to the first electric vehicle equal to zero, the supply of power to the energy storage system is increased (energy storage system charging) from zero to a charging power. The charging power can be less than or equal to the power supplied from the grid. Subsequent to a period of time for energy storage system charging, the supply of power to the energy storage system is decreased to zero and the supply of power to the second electric vehicle is increased from zero to the charging power.

For instance, a method for charging electric vehicles comprises alternately and sequentially (i) charging the energy storage system from the power grid during a period of reduced electric vehicle charging, and (ii) charging electric vehicles using combined power from the power grid and the energy storage system during a period of reduced energy storage system charging. The power grid can supply substantially constant power that is less than a power requirement of a given electric vehicle being charged. The period of reduced electric vehicle charging can be associated with power input into the electric vehicle that is less than a maximum input (e.g., equal to power supplied by the grid), zero, or negative (e.g., the electric vehicle discharges energy). The period of reduced energy storage system charging can be associated with power input into the energy storage system that is less than a maximum power input (e.g., power supplied by the grid), zero or negative

(e.g., the energy storage system discharges energy at a rate that is less than the rate of electric vehicle charging.

### Systems for charging electric vehicles

Another aspect of the present disclosure provides systems for charging electric vehicles. A system can include a charging station that is electrically coupled to an energy storage system (ESS) and a power grid. An energy storage device (e.g., battery) of an electric vehicle can be brought in electrical communication with the charging station for charging and/or discharging.

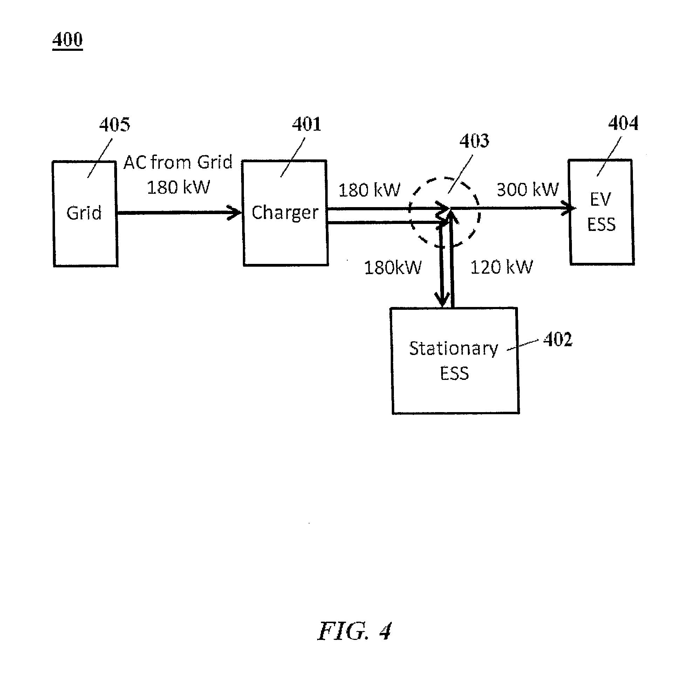

**FIG. 4** shows a system 400 for charging and/or discharging an energy storage device of an electric vehicle, such as a bus. The system 400 comprises a charger 401 and an ESS 402 that can be coupled to a charging station 403 (dotted lines). The ESS 402 can be stationary. The charging station 403 is configured to come in electrical communication with an electric vehicle (EV) 404 that can include an energy storage device to be charged or discharged through the charging station 403. The charger 401 is electrically coupled to a power grid 405. The arrows show the flow of power among the units. The flow of power can be regulated with the aid of the charging station 403.

The grid 405 can deliver power to the charger 401 on a continuous or semi-continuous basis. In some examples, the grid 405 supplies at least about 1 kW, 10 kW, 20 kW, 30 kW, 40 kW, 50 kW, 60 kW, 70 kW, 80 kW, 90 kW, 100 kW, 150 kW, 160 kW, 170 kW, 180 kW, 190 kW, 200 kW, 250 kW, 300 kW, 400 kW or 500kW of power per electric vehicle being charged (or discharged). The power can be delivered to the charger 401, which can subsequently be delivered to the electric vehicle 404. For example, the charger 401 can continuously supply 180 kW of power from the grid 405 to the charger 401, which can be used to charge the ESS 402 or charge the energy storage device of the vehicle 404. Any deficiency in the power requirement of the energy storage device of the electric vehicle 404 can be met using power from the ESS 402. For example, if the electric vehicle 404 requires 300 kW of power for charging and the charger 401 supplies 180 kW, then the ESS 402 can supply 120 kW of power to the electric vehicle 404.

The charger 401 can continuously supply power from the grid 405 during a predetermined or otherwise given period of time, such as hour(s) during the day, day(s) during the week, week(s) during the month, or month(s) during the year. In an example, the charger 401 continuously supplies a given power output (e.g., 180 kW) between the hours of 9 AM and 5 PM on Monday through Friday. At other times, the charging station 403 can direct power from the charger 401 to the ESS 402 to charge the ESS 402.

The ESS 402 can be, for example, a solid state energy storage device, a capacitor, an ultracapacitor, fuel cell, electrochemical battery, flow battery, pumped water (or pumped hydro), thermal storage or a flywheel energy storage system.

The ESS 402 can include one or more energy storage devices, such as batteries. The energy storage devices can be in parallel and/or in series. For example, the ESS 402 comprises ten electrochemical batteries in parallel. An individual energy storage device of the ESS 402 can be configured to deliver between about 1 kWh and 1000 kWh, or 10 kWh and 500 kWh, or 20 kWh and 100 kWh of energy. In an example, the ESS 402 is configured to deliver between about 9 kWh and 63 kWh of energy.

In some examples, during a period of time in which electric vehicles are in use and require charging and/or discharging, the grid 405 can continuously supply a given amount of power or cycle power within a given range. In an example, during the period of time in which electric vehicle are in use, the grid 405 supplies a substantially constant amount of power (e.g., 180 kW) to the charger 401, which in turn directs the power to electric vehicles in succession. The power supplied by the power grid can be less than the power required by an electric vehicle to be charged within a given period of time (e.g., 5 minutes). The difference in power required for charging can be supplied by the ESS 402. In some cases, during the period in which electric vehicles are in operation, the grid 405 supplies the charger 401 a constant or substantially constant quantity of power. During the time period in which electric vehicles are not in operation and the ESS 402 requires charging, the grid 405 can supply the charger 401 power for use in charging in the ESS 402. This approach can substantially reduce the power draw on the grid during periods in which electric vehicles are in operation and require charging per a set schedule (e.g., every hour).

Power or electricity from the grid 405 to the charger 401 can be supplied as alternating current (AC) or, alternatively, direct current (DC). If DC is used, an AC to DC conversion can be employed prior to providing power from the grid 405 to the charger 401. The charger 401 can supply power to the charging station 403 and subsequently the electric vehicle 404 as AC or DC. The charger 401 can supply power from the grid 405 to the ESS 402 as AC or DC. In some cases, the charger 401 employs an AC-to-DC conversion of electricity and supplies power in DC format to the charging station 403 and the ESS 402.

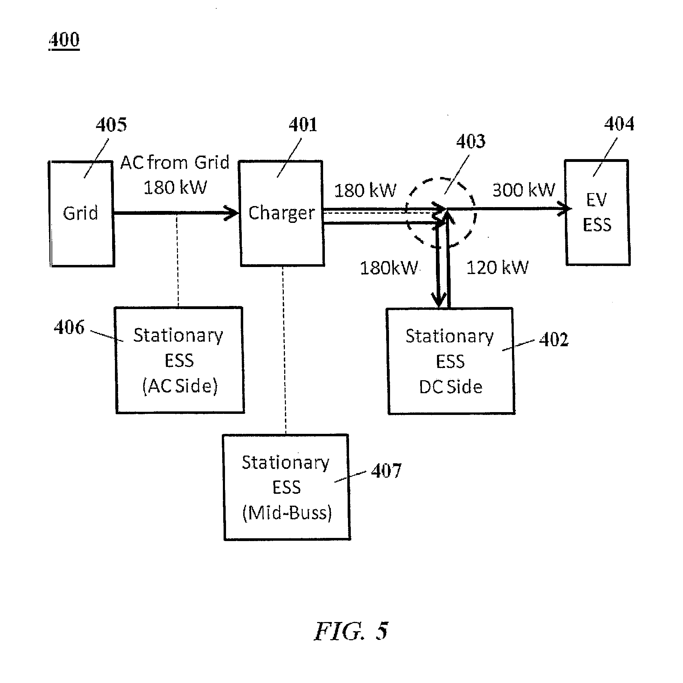

The system 400 can include energy storage systems at various locations. In **FIG. 5****,** the system 400 comprises an ESS 406 before the charger 401 and another ESS 407 that is directly electrically coupled to the charger 401. The ESS 407 can be a mid-buss ESS. In some cases, the system 400 includes only one of the ESS's 406 and 407. As an alternative, one or both of the ESS's 406 and 407 are omitted.

The ESS 406 and ESS 407 can be used to take load off of the grid 405, such as in cases in which the charging station 403 is unable to deliver power to electric vehicles in order to maintain the continuous draw of power on the grid 405, such as, for example, in situations in which the charging station 403 is inoperable or one or more electric vehicles are inoperable.

An ESS can include one or more energy storage devices, such as batteries. An individual energy storage device can include one or more energy storage cells. For instance, an energy storage device can include at least 1, 2, 3, 4, 5, 6, 7, 8, 9, 10, 20, 30, 40, 50, 60, 70, 80, 90, 100, 200, 300, 400, or 500 cells, which can be in series or parallel, or the combination of serial and parallel connectivity for groups of cells. In some examples, an individual cell is a solid state, wet or dry cell. Examples of cells include galvanic cells, electrolytic cells, fuel cells, flow cells and voltaic piles. An example of a solid state cell is a lithium or lithium titanate based cell. The energy storage devices can be in parallel and/or in series. For example, the ESS 402, 406 and/or 407 comprises ten electrochemical batteries in parallel, with each battery comprising a plurality of electrochemical cells. An individual energy storage device of the ESS 402 can be configured to store and deliver between about 1 kWh and 1000 kWh, or 10 kWh and 500 kWh, or 20 kWh and 100 kWh of energy. In an example, the ESS 402, 406 and/or 407 is configured to deliver between about 9 kWh and 63 kWh of energy.

An ESS can be rechargeable. An ESS be charged via power from a power grid, an electric vehicle, or another ESS. In an example, the ESS 402 is charged using power from the power grid 405. In another example, the ESS 402 is charged using power from the electric vehicle 404. In another example, the ESS 402 is charged using power from the ESS 406 or 407.

An ESS can be charged for a period of time that is sufficient for the ESS to achieve a predetermined or otherwise given state of charge. In some examples, an ESS is charged until the ESs has achieved at least about 20%, 30%, 40%, 50%, 60%, 70%, 80%, 90%, 95%, or 99% capacity.

An ESS can be charged and discharged one or more times. In some examples, an ESS is charged and discharged at least about 1, 2, 3, 4, 5, 6, 7, 8,9, 10, 20,30, 40, 50, 60, 70, 80, 90, 100, 200, 300, 400, 500, or 1000 times.

The system 400 can be used to charge one or a plurality of electric vehicles in succession. The system 400 advantageously enables electric vehicle charging in a manner that imposes a substantially steady or continuous demand on a power grid during a charging time period (e.g., on peak time period). Such steady or continuous demand can help minimize fluctuations in utility usage.

In some embodiments, a vehicle communicates with a charging station. The vehicle can communicate a geographic location (or geolocation) of the vehicle to the charging station, or the charging station can determine the geolocation of the vehicle via communication with the vehicle (e.g., by triangulation). Communication between the charging station and the vehicle can be one way or two way.

Communication between the charging station and the vehicle can enable the charging station to determine a state of charge of an energy storage device of the vehicle. In an example, the vehicle informs the charging station that its battery is at 50% capacity upon approach to the charging station. The charging station can then select the amount of power to draw from each of the ESS and the grid to charge the energy storage device of the vehicle to a higher capacity, such as at or around 100%. In some cases, the charging station can select the amount of power to draw from either or both of the ESS and the grid such that the ESS is not fully depleted and has capacity to provide charge to a subsequent vehicle. For instance, the charging station can draw less than the maximum permissible constant power from the grid if the charging station determines that the energy storage device of the vehicle has a state of charge that is higher than anticipated, which may be the case if, for example, the vehicle did not make frequent stops.

The geolocation of the vehicle en route can be used to calculate the estimated time of arrival of the vehicle, which can be used to select operating parameters of the charging station. As such, the charging station can be operated dynamically to compensate for vehicle arrival time (e.g., whether the vehicle is delayed) and vehicle state of charge. For instance, if the vehicle is close to 0% capacity, more power may be required from the ESS to charge the vehicle, and the charging station may employ a backup ESS to subsequently charge the ESS if grid power is not sufficient.

In some cases, operating parameters of the charging station can be selected based on a geolocation of a vehicle approaching the charging station for charging and/or a vehicle leaving the charging station after it has been charged. The operating parameters can be selected based on the geolocation of the vehicle and the state of charge of the vehicle as a function of geolocation. The geolocation of vehicles with respect to the geolocation of the charging station can be used to compare vehicle operating parameters to a set or otherwise predetermined schedule and adjust the ESS charging rate between vehicles to prevent overfilling of the ESS, which can, in some cases, result in the ESS to turn off, which may result in slow start-up for subsequent charges. For example, if a vehicle is coming in late to schedule or fairly full, the grid power can be turned down slightly to prevent overfilling before the next vehicle causing grid power to go to zero. In some cases, the grid power would not be increased above a given limit.

In some embodiments, the geolocation of a vehicle individually or among a fleet of vehicles is used to select one or more operating parameters of the charging station such that the demand on the power grid or fluctuations in utility usage (e.g., utility cost) is reduced or minimized and/or the ESS is employed for use without depleting the energy reserves of the ESS. In an example, the geolocation of a vehicle among a fleet is used to select charge profile shaping during power ramp up, charging, and power ramp down charging cycle.

In some cases, the ESS can be used to store excess energy from a first vehicle and supply that to a second vehicle. In such a case, the power from the grid selected to charge the first vehicle can greater than or equal to the power from the grid selected to charge the second vehicle.

The geolocation of each vehicle in a fleet of vehicles can be used to determine an estimated time of arrival for charging, which can be used to predict the amount of power required to charge each vehicle. As such, the charging station can enable a predictable demand of power from the power grid or a predictable fluctuation in utility usage (e.g., utility cost), which can aid in reducing or minimizing the instantaneous flow of power from the grid and a mitigation in demand rate and/or fluctuation in utility usage.

In some embodiments, a charging station employs the use of the energy capacity of a fleet of electric vehicles to buffer the power grid. This enables the direction of power back to the grid from an electric vehicle. For instance, based on the level of charge of a first bus and a second bus, the charging station can determine that the first bus needs less power per charge than the second bus. In such a case, the charging station may draw less power from the power grid to provide to the first bus, or, alternatively, may direct power from the first vehicle to charge the ESS of the charging station.

In some examples, the ESS is charged and discharged in a manner such that the ESS does no reach a state of full or substantially full charge, which in some cases may require the ESS to be shut off. The geolocation of a vehicle and the state of charge of the energy storage device of the vehicle can be used to avoid the ESS from reaching a state of full charge during gaps between vehicle charges.

In some scenarios, knowledge of vehicle operating parameters (e.g., state of charge, geolocation, and estimated time of arrival to charging station) can be used to make slight and smooth adjustments to power from the grid to avoid overfilling the ESS, which can cause the grid power to go to zero during periods in which a vehicle is not being charged or when a vehicle is being charged but both the vehicle and the ESS are fully charged. In some situations, if a vehicle arrives later than a scheduled or otherwise predetermined estimated time of arrival and the ESS is full, a soft start can be employed in which the power drawn by the charging station from the grid is gradually increased or increased at a predetermine rate. The rate of increase can enable the grid and utility provider(s) to predict the increase in power demand by the vehicle. In some embodiments, charging priorities are to provide a constant load on a power grid, smooth adjustments to prevent overfilling and shut off of grid power (e.g., which can result from the ESS reaching a state of full charge).

Other methods for automating the charging and connection of a vehicle based at least in part on the location of the vehicle are described, for example, in U.S. Patent Publication No. 2013/0193918 ("SYSTEMS AND METHODS FOR AUTOMATIC CONNECTION AND CHARGING OF AN ELECTRIC VEHICLE AT A CHARGING STATION"), which is entirely incorporated herein by reference.

The present disclosure provides computer systems that are programmed to implement methods of the disclosure. For instance, a control system can be programmed to regulate the flow of electricity to an electric vehicle or an ESS. The control system can be part of a charging station, or a standalone system that is in communication with the ESS.

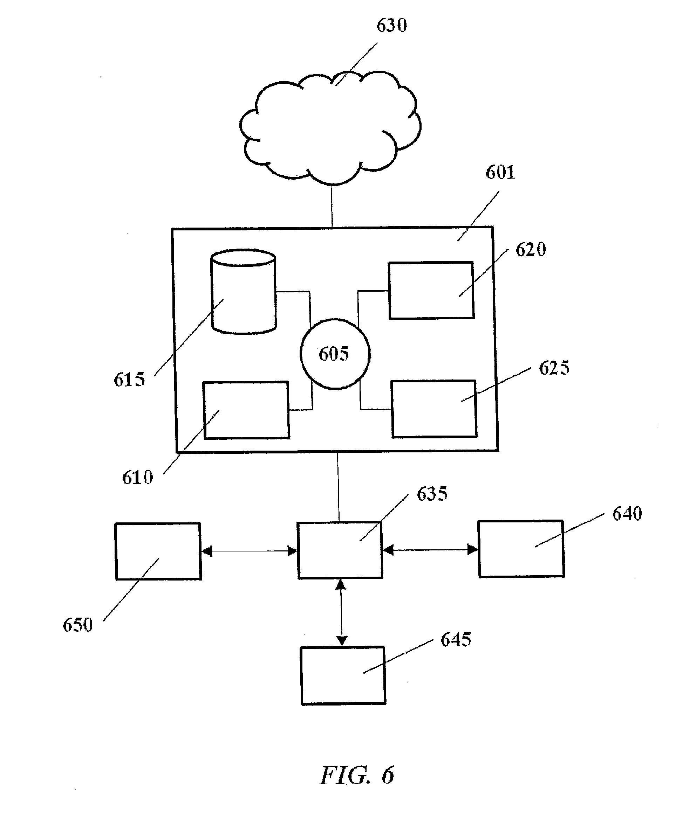

**FIG. 6** shows a computer system 601 that is programmed or otherwise configured to regulate the flow of electricity (power) to or from an electric vehicle, a power grid, and one or more energy storage systems. The computer system 601 includes a central processing unit (CPU, also "processor" and "computer processor" herein) 605, which can be a single core or multi core processor, or a plurality of processors for parallel processing. The computer system 601 also includes memory or memory location 610 (e.g., random-access memory, read-only memory, flash memory), electronic storage unit 615 (e.g., hard disk), communication interface 620 (e.g., network adapter) for communicating with one or more other systems, and peripheral devices 625, such as cache, other memory, data storage and/or electronic display adapters. The memory 610, storage unit 615, interface 620 and peripheral devices 625 are in communication with the CPU 605 through a communication bus (solid lines), such as a motherboard. The storage unit 615 can be a data storage unit (or data repository) for storing data. The computer system 601 can be operatively coupled to a computer network ("network") 630 with the aid of the communication interface 620. The network 630 can be the Internet, an internet and/or extranet, or an intranet and/or extranet that is in communication with the Internet. The network 630 in some cases is a telecommunication and/or data network. The network 630 can include one or more computer servers, which can enable distributed computing, such as cloud computing. The network 630, in some cases with the aid of the computer system 601, can implement a peer-to-peer network, which may enable devices coupled to the computer system 601 to behave as a client or a server.

The computer system 601 is in communication with a charging station 635 that is configured to come in electrical communication with an energy storage device (e.g., battery) of an electric vehicle 640. The charging station 635 is in electrical communication with an ESS 645 and a power grid / charger 650. During operation, power can flow from each of the units 635, 640, 645 and 650 in a bi-directional or unidirectional fashion.

The CPU 605 can execute a sequence of machine-readable instructions, which can be embodied in a program or software. The instructions may be stored in a memory location, such as the memory 610. Examples of operations performed by the CPU 605 can include fetch, decode, execute, and writeback.

The storage unit 615 can store files, such as drivers, libraries and saved programs. The storage unit 615 can store programs generated by users and recorded sessions, as well as output(s) associated with the programs. The storage unit 615 can store user data, e.g., user preferences and user programs. The computer system 601 in some cases can include one or more additional data storage units that are external to the computer system 601, such as located on a remote server that is in communication with the computer system 601 through an intranet or the Internet.

The computer system 601 can communicate with one or more remote computer systems through the network 630. For instance, the computer system 601 can communicate with a remote computer system of a user (e.g., operator). Examples of remote computer systems include personal computers (e.g., portable PC), slate or tablet PC's (e.g., Apple® iPad, Samsung® Galaxy Tab), telephones, Smart phones (e.g., Apple® iPhone, Android-enabled device, Blackberry®), or personal digital assistants. The user can access the computer system 601 via the network 630.

Methods as described herein can be implemented by way of machine (e.g., computer processor) executable code stored on an electronic storage location of the computer system 601, such as, for example, on the memory 610 or electronic storage unit 615. The machine executable or machine readable code can be provided in the form of software. During use, the code can be executed by the processor 605. In some cases, the code can be retrieved from the storage unit 615 and stored on the memory 610 for ready access by the processor 605. In some situations, the electronic storage unit 615 can be precluded, and machine-executable instructions are stored on memory 610.

The code can be pre-compiled and configured for use with a machine have a processer adapted to execute the code, or can be compiled during runtime. The code can be supplied in a programming language that can be selected to enable the code to execute in a pre-compiled or as-compiled fashion.

Aspects of the systems and methods provided herein, such as the computer system 601, can be embodied in programming. Various aspects of the technology may be thought of as "products" or "articles of manufacture" typically in the form of machine (or processor) executable code and/or associated data that is carried on or embodied in a type of machine readable medium. Machine-executable code can be stored on an electronic storage unit, such memory (e.g., read-only memory, random-access memory, flash memory) or a hard disk. "Storage" type media can include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer into the computer platform of an application server. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to non-transitory, tangible "storage" media, terms such as computer or machine "readable medium" refer to any medium that participates in providing instructions to a processor for execution.

Hence, a machine readable medium, such as computer-executable code, may take many forms, including but not limited to, a tangible storage medium, a carrier wave medium or physical transmission medium. Non-volatile storage media include, for example, optical or magnetic disks, such as any of the storage devices in any computer(s) or the like, such as may be used to implement the databases, etc. shown in the drawings. Volatile storage media include dynamic memory, such as main memory of such a computer platform. Tangible transmission media include coaxial cables; copper wire and fiber optics, including the wires that comprise a bus within a computer system. Carrier-wave transmission media may take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a ROM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a processor for execution.

The computer system 601 can include or be in communication with an electronic display that comprises a user interface (UI) for providing, for example, operational parameters of a charging station, an electric vehicles(s), ESS and/or electric vehicle(s). Examples of UI's include, without limitation, a graphical user interface (GUI) and web-based user interface.

### Example 1

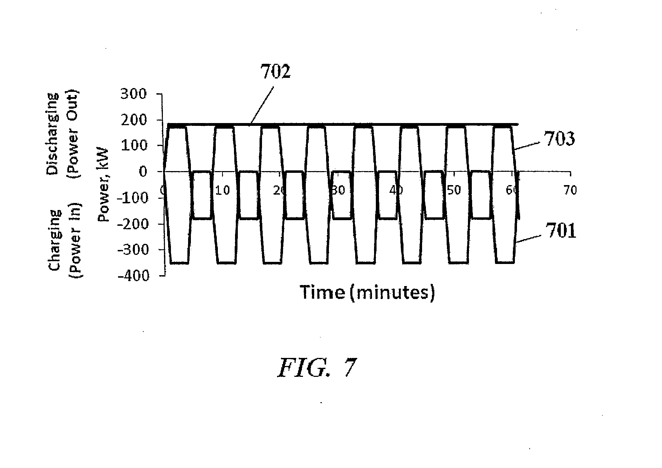

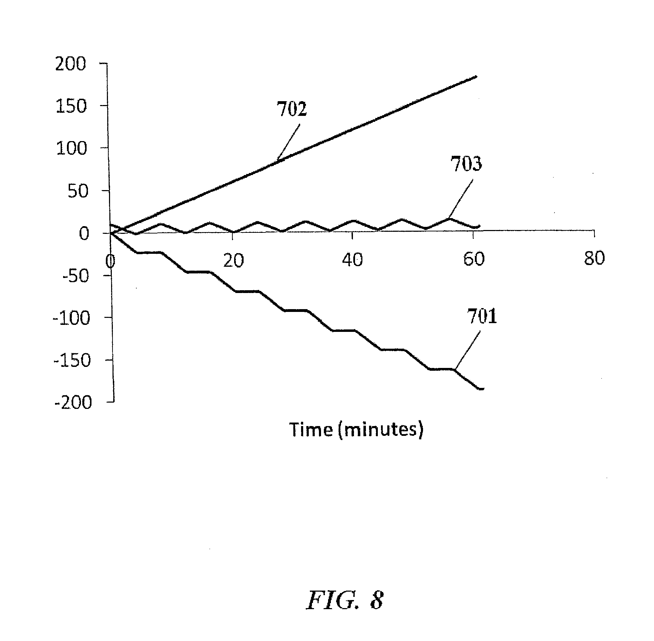

**FIG. 7** shows example plots of power as a function of time (P(t)) for select units of the system 400 of **FIGs**. **4** and **5****.** **FIG. 8** shows the cumulative energy (kWh) with time (minutes). Positive power corresponds to power output (or discharging), and negative power corresponds to power input (or charging). The plots of **FIG. 7** span a time period of about one hour. The charging power profile (power as a function of time) for electric vehicles 404 is shown in plot 701. For each vehicle charged (eight total, as shown), a charging profile is employed in which power delivered to an energy storage device of a vehicle 404 is increased from zero to 350 kW, maintained at 350 kW for about three minutes, and reduced to zero. Each vehicle 404 is charged in about five minutes, the period of time between vehicle charges is about three minutes. A portion of the charging power of a vehicle 404 is supplied from the grid 405, and the remainder of the charging power is supplied from the ESS 402. The power profile of the grid 405 is shown in plot 702, and the power profile of the ESS 402 is shown in plot 703. An increase or decrease in power can be linear or non-linear.

In a period in which multiple electric vehicles are charged in succession, the charger 401 continuously draws about 180 kW from the grid 405 (plot 702). The remainder of the power requirement of the vehicle 404 is supplied by the ESS 402 (plot 703). The ESS 402 supplies a maximum of 170 kW to supplement the 180 kW supplied by the grid and provides a total charging power of about 350 kW. When the charging power for a given vehicle 404 is reduced from 350 kW to zero, the power supplied by the ESS 402 to the vehicle 404 is reduced from 170 kW to zero, and subsequently from zero to -180 kW (ESS 402 charging). As such, during periods in which the vehicle 402 is not charging or charging power is reduced, power supplied to the ESS 402 (or other ESS's) can be increased to charge the ESS 402 using the continuous supply of power (180 kW) from the grid 405. Such dynamic grid load clutching enables the load on the grid 405 to be minimized and reduces, if not eliminates the instantaneous demand on the grid or fluctuation in utility cost upon vehicle charging.

Although **FIG. 7** has been described with reference to certain operational parameters (e.g., powers, times, vehicles charged), such parameters are examples and other parameters can be used. For example, with the span of one hour, sixteen or thirty two vehicles can be charged. As another example, the constant power drawn from the grid 402 in the span of one hour can be at least about 1 kW, 10 kW, 20 kW, 30 kW, 40 kW, 50 kW, 60 kW, 70 kW, 80 kW, 90 kW, 100 kW, 150 kW, 160 kW, 170 kW, 180 kW, 190 kW, 200 kW, 250 kW, 300 kW, 400 kW, or 500 kW.

The power supplied from the power grid from time zero onward can be increased at various rates. To help minimize the instantaneous demand on the power grid or fluctuation in utility cost, a "soft start" can be employed in which the power drawn from the grid is gradually increased or increased at a predetermined rate. The rate of increase can enable the grid and utility provider(s) to predict the increase in power demand by a vehicle. More power can be supplied from the energy storage system to make up for the additional need for power in this time period. In such a case, the power supplied from the energy storage unit can exceed the power supplied from the grid.

Example powers that correspond to those plotted in FIG. 7 are shown in Table 1 below. Powers for buses 1, 2 and 3 are shown, but powers for buses 4-8 are the same. Numbers that are not in parentheses correspond to discharging, and numbers that are in parentheses correspond to the power during charging. Table 2 shows the instantaneous energy as a function of time corresponding to the buses charged in Table 1.

**Table 1: Power as a function of time.**

| Time (minutes) | Grid/Charger | Stationary ESS | Bus | Bus # |
|---|---|---|---|---|
| 0 | 0 | 0 | 0 | 1 |
| 0.5 | 90 | 85 | (175) | |
| 1 | 180 | 170 | (350) | |
| 4 | 180 | 170 | (350) | |
| 4.5 | 180 | (5) | (175) | |
| 5 | 180 | (180) | 0 | |
| 8 | 180 | (180) | 0 | 2 |
| 8.5 | 180 | (5) | (175) | |
| 9 | 180 | 170 | (350) | |
| 12 | 180 | 170 | (350) | |
| 12.5 | 180 | (5) | (175) | |
| 13 | 180 | (180) | 0 | |
| 16 | 180 | (180) | 0 | 3 |
| 16.5 | 180 | (5) | (175) | |
| 17 | 180 | 170 | (350) | |
| 20 | 180 | 170 | (350) | |
| 20.5 | 180 | (5) | (175) | |
| 21 | 180 | (180) | 0 | |
| 24 | 180 | (180) | 0 | 4 |
| 24.5 | 180 | (5) | (175) | |
| 25 | 180 | 170 | (350) | |
| 28 | 180 | 170 | (350) | |
| 28.5 | 180 | (5) | (175) | |
| 29 | 180 | (180) | 0 | |
| 32 | 180 | (180) | 0 | 5 |
| 32.5 | 180 | (5) | (175) | |
| 33 | 180 | 170 | (350) | |
| 36 | 180 | 170 | (350) | |
| 36.5 | 180 | (5) | (175) | |
| 37 | 180 | (180) | 0 | |
| 40 | 180 | (180) | 0 | 6 |
| 40.5 | 180 | (5) | (175) | |
| 41 | 180 | 170 | (350) | |
| 44 | 180 | 170 | (350) | |
| 44.5 | 180 | (5) | (175) | |
| 45 | 180 | (180) | 0 | |
| 48 | 180 | (180) | 0 | 7 |
| 48.5 | 180 | (5) | (175) | |
| 49 | 180 | 170 | (350) | |
| 52 | 180 | 170 | (350) | |
| 52.5 | 180 | (5) | (175) | |
| 53 | 180 | (180) | 0 | |
| 56 | 180 | (180) | 0 | 8 |
| 56.5 | 180 | (5) | (175) | |
| 57 | 180 | 170 | (350) | |
| 60 | 180 | 170 | (350) | |
| 60.5 | 180 | (5) | (175) | |
| 61 | 180 | (180) | 0 | |

**Table 2: Instantaneous energy as a function of time.**

| Time (minutes) | Grid/Charger | Stationary ESS | Bus | Bus # |
|---|---|---|---|---|
| 0 | 0 | 0.00 | 0 | 1 |
| 0.5 | 0.75 | 0.71 | -1.46 | |
| 1 | 1.50 | 1.42 | -2.92 | |
| 4 | 9.00 | 8.50 | -17.50 | |
| 4.5 | 1.50 | -0.04 | -1.46 | |
| 5 | 1.50 | -1.50 | 0.00 | |
| 8 | 9.00 | -9.00 | 0.00 | 2 |
| 8.5 | 1.50 | -0.04 | -1.46 | |
| 9 | 1.50 | 1.42 | -2.92 | |
| 12 | 9.00 | 8.50 | -17.50 | |
| 12.5 | 1.50 | -0.04 | -1.46 | |
| 13 | 1.50 | -1.50 | 0.00 | |
| 16 | 9.00 | -9.00 | 0.00 | 3 |
| 16.5 | 1.50 | -0.04 | -1.46 | |
| 17 | 1.50 | 1.42 | -2.92 | |
| 20 | 9.00 | 8.50 | -17.50 | |
| 20.5 | 1.50 | -0.04 | -1.46 | |
| 21 | 1.50 | -1.50 | 0.00 | |
| 24 | 9.00 | -9.00 | 0.00 | 4 |
| 24.5 | 1.50 | -0.04 | -1.46 | |
| 25 | 1.50 | 1.42 | -2.92 | |
| 28 | 9.00 | 8.50 | -17.50 | |
| 28.5 | 1.50 | -0.04 | -1.46 | |
| 29 | 1.50 | -1.50 | 0.00 | |
| 32 | 9.00 | -9.00 | 0.00 | 5 |
| 32.5 | 1.50 | -0.04 | -1.46 | |
| 33 | 1.50 | 1.42 | -2.92 | |
| 36 | 9.00 | 8.50 | -17.50 | |
| 36.5 | 1.50 | -0.04 | -1.46 | |
| 37 | 1.50 | -1.50 | 0.00 | |
| 40 | 9.00 | -9.00 | 0.00 | 6 |
| 40.5 | 1.50 | -0.04 | -1.46 | |
| 41 | 1.50 | 1.42 | -2.92 | |
| 44 | 9.00 | 8.50 | -17.50 | |
| 44.5 | 1.50 | -0.04 | -1.46 | |
| 45 | 1.50 | -1.50 | 0.00 | |
| 48 | 9.00 | -9.00 | 0.00 | 7 |
| 48.5 | 1.50 | -0.04 | -1.46 | |
| 49 | 1.50 | 1.42 | -2.92 | |
| 52 | 9.00 | 8.50 | -17.50 | |
| 52.5 | 1.50 | -0.04 | -1.46 | |
| 53 | 1.50 | -1.50 | 0.00 | |
| 56 | 9.00 | -9.00 | 0.00 | 8 |
| 56.5 | 1.50 | -0.04 | -1.46 | |
| 57 | 1.50 | 1.42 | -2.92 | |
| 60 | 9.00 | 8.50 | -17.50 | |
| 60.5 | 1.50 | -0.04 | -1.46 | |
| 61 | 1.50 | -1.50 | 0.00 | |

### Example 2

A bus uses 2.5 kWh/mile and travels at a speed of about 10 mph (average). The bus requires about 25 kWh of energy to achieve a state of charge that is sufficient for its route. The bus is part of a fleet of buses that requires that an individual bus be charged in 5 minutes, which places a power requirement of 25 kWh / (5 minutes * 1 hour / 60 minutes) = 300 kW per bus. A charging station, such as the charging station described in the context of **FIGs**. **4** and **5****,** is capable of charging the bus in 5 minutes. Buses arrive at the charging station every eight minutes, which leaves a three-minute gap between charges. The eight buses are charged in period of one hour. Per individual bus, 180 kW of the power requirement is delivered from a power grid, and the remainder of the power is delivered from an energy storage system. The power grid supplies 180 kW during the three-minute gap between charges. This advantageously lowers the average power draw on the power grid from 300 kW to 180 kW.

Devices, systems and methods provided herein may be combined with or modified by other devices, systems and methods, such as devices and/or methods described in U.S. Patent Publication No. 2013/0057211 and PCT Patent Publication Nos. WO2010132443, WO2011139675 and WO2012040369, which are entirely incorporated herein by reference.

Disclosure of ranges herein includes disclosure of all values and further divided ranges within the entire range, including endpoints given for the ranges.

It should be understood from the foregoing that, while particular implementations have been illustrated and described, various modifications may be made thereto and are contemplated herein. It is also not intended that the invention be limited by the specific examples provided within the specification. While the invention has been described with reference to the aforementioned specification, the descriptions and illustrations of embodiments of the invention herein are not meant to be construed in a limiting sense. Furthermore, it shall be understood that all aspects of the invention are not limited to the specific depictions, configurations or relative proportions set forth herein which depend upon a variety of conditions and variables. Various modifications in form and detail of the embodiments of the invention will be apparent to a person skilled in the art. It is therefore contemplated that the invention shall also cover any such modifications, variations and equivalents.

## Claims

1. A method of charging an electric vehicle, comprising:
electrically coupling the electric vehicle to a charging station, the charging station being electrically coupled to both a power supply grid and an energy storage system; and
charging the electric vehicle using the charging station.

2. The method of claim 1, wherein charging the electric vehicle includes (a) directing a first quantity of power to the electric vehicle from power supply grid, and (b) directing a second quantity of power to the electric vehicle from the energy storage system.

3. The method of claim 1, wherein charging the electric vehicle includes charging the electric vehicle using power from the power supply grid when energy cost is a first cost, and charging the electric vehicle using power from the energy storage system when the energy cost is a second cost higher than the first cost.

4. The method of claim 1, further including charging the energy storage system using power from the power grid.

5. A method of charging an electric vehicle, comprising:
electrically coupling the electric vehicle to a charging station, the charging station being electrically coupled to both a power supply grid and an energy storage system;
directing a first quantity of power from the power supply grid to the electric vehicle; and
directing a second quantity of power from the energy storage system to the electric vehicle.

6. The method of claim 5, further including directing power from the power supply grid to the energy storage system to charge the energy storage system.

7. The method of claim 4 or 6, wherein charging the energy storage system is performed when energy cost is lower than a peak energy cost during a day.

8. The method of claim 2 or 5, wherein the first quantity is greater than the second quantity.

9. The method of claim 2 or 5, wherein the second quantity is greater than the first quantity.

10. The method of claim 1 or 5, wherein the energy storage system includes one or more batteries and/or one or more capacitors.

11. A charging system for an electric vehicle, comprising:
a charging station configured to couple to and charge an electric vehicle, the charging station being electrically coupled to a power supply grid; and
an energy storage system electrically coupled to the charging station, the energy storage system being configured to (a) provide power to the electric vehicle, and (b) receive power from the power grid.

12. The charging system of claim 11, wherein the energy storage system includes one or more batteries.

13. The charging system of claim 11, wherein the energy storage system includes one or more capacitors.

14. The charging system of claim 11, further including a control system operatively coupled to the charging station, the control system being configured to regulate the flow of power from the power supply grid and the energy storage system to the electric vehicle.

15. The charging system of claim 14, wherein the control system is configured to (i) direct power from the power supply grid to the electric vehicle when energy cost is a first cost, and (ii) direct power from the energy storage system to the electric vehicle when energy cost is a second cost higher than the first cost.
